# EUROPEAN PATENT SPECIFICATION

(11) **EP 2 390 028 B1**
(45) Date of publication and mention of the grant of the patent: **19.12.2012**
(21) Application number: 10164486.2
(22) Date of filing: 31.05.2010
(51) Int. Cl.: B23B 51/02

(54) **Twist drill**
Spiralbohrer
Foret hélicoïdal

(43) Date of publication of application: 30.11.2011
(73) Proprietor: SECO TOOLS AB (publ), 737 82 Fagersta (SE)
(72) Inventor: Frejd, Stefan, SE 614 30, Söderköping (SE)
(74) Representative: Hägglöf, Henrik

(56) References cited:
- EP-A1- 1 275 458
- WO-A1-99/50014
- DE-U1-202006 003 539
- GB-A- 225 900
- US-B1- 6 506 003

## Description

### BACKGROUND AND SUMMARY

The present invention relates to a twist drill and, more particularly, to a twist drill having a drill tip with concave recesses.

In a twist drill, a drill body includes a central portion or web with, ordinarily, two or more lands joined together by the web. The lands may extend helically around the web or linearly along the web. The web may have a tapered, parallel, or parallel-tapered shape. A chisel edge is formed at the leading end of the web. Rather than perform a substantial cutting function, the chisel edge ordinarily merely pushes workpiece material ahead of it in the direction of rotation. The web does not perform a cutting function but, the larger the web, and the chisel edge, the larger the power consumption and torque necessary to move the drill tip through a workpiece. Consequently, the web is often thinned by the chisel edge so that the length of the chisel edge at the drill tip is reduced, thereby tending to reduce power and torque consumption by the web and the chisel edge. WO 99/50014, on which the preamble of claim 1 is based, discloses a drill having concave recesses on opposite sides of a chisel edge.

It is desirable to further reduce power and torque necessary to move a drill tip through a workpiece. It is also desirable to facilitate removal of material that the chisel edge pushes ahead of it as the drill tip is rotated in a workpiece.

The present invention, discloses a cutting head of a twist drill according to claim 1.

### BRIEF DESCRIPTION OF THE DRAWINGS

The features and advantages of the present invention are well understood by reading the following detailed description in conjunction with the drawings in which like numerals indicate similar elements and in which:

FIG. 1 is a perspective view of a twist drill according to an aspect of the present invention;

FIG. 2 is a perspective view of a cutting head according to an aspect of the present invention;

FIG. 3a is a top plan view of a cutting head according to an aspect of the present invention;

FIG. 3b is an enlarged view of a portion of the cutting head of FIG. 3a, and FIG. 3c is an enlarged view of a similar portion of the cutting head of FIG. 3a of an alternative embodiment; and

FIG. 4 is a partially cross-sectional view of a portion of the cutting head taken at section 4-4 of FIG. 3a.

### DETAILED DESCRIPTION

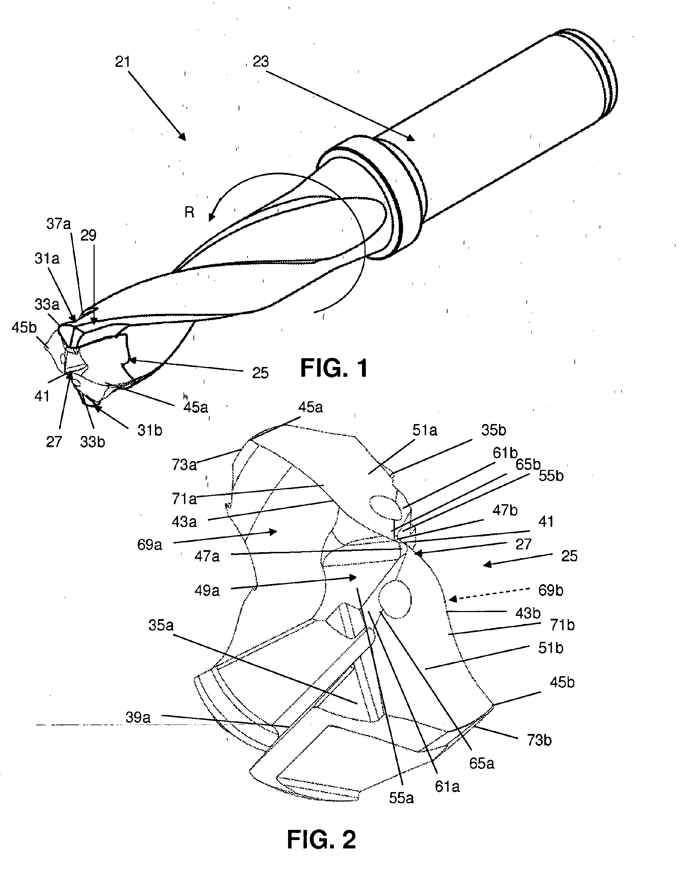

A twist drill 21 comprising a shank 23 and a cutting head 25 having a drill tip 27 as seen in FIG. 1. The cutting head 25 is removably attachable to the shank 23. The cutting head 25 can be removably attached to the shank by any number of suitable couplings but is illustrated as being connected by a bayonet-type of coupling 29 such as is disclosed in U.S. Patent Application Publication No. US2009/0311060. The drill may have flushing channels.

The bayonet-type coupling 29 comprises a pair of coupling legs 31a and 31b defining a space for receiving a coupling portion of the cutting head 25. Each leg 31a and 31b has a shoulder 33a and 33b that is received in a corresponding shoulder 35a and 35b (FIG. 2) of the cutting head 25 to assist in preventing axial displacement of the cutting head from the shank 23. Each leg 31a and 31b further has a generally axially extending surface 37a designed for abutment against a corresponding stop surface 39a and 39b (FIG. 2) on the cutting head 25 in order to transfer torque from the shank 23 to the cutting head during rotation of the drill 21 in the machining direction of rotation R.

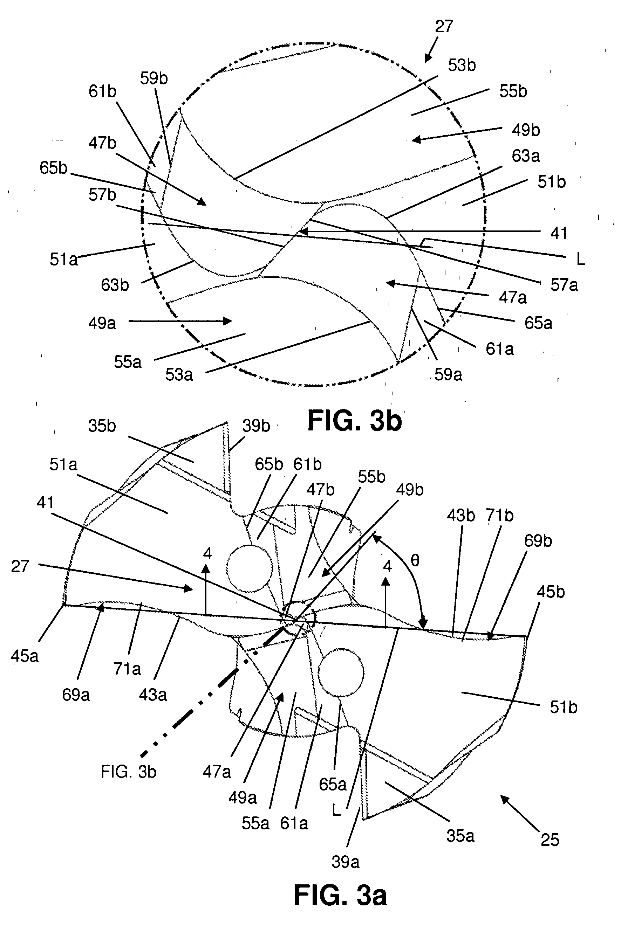

As seen in FIGS. 2 and 3a, the cutting head 25 comprises a web ending at the drill tip 27 in a chisel edge 41. The chisel edge is preferably straight. The chisel edge defines the axially forwardmost area or point of the cutting head 25. The drill tip 27 further comprises two main cutting edges 43a and 43b, also referred to as lips. Each main cutting edge 43a and 43b extends between but not necessarily to the chisel edge 41 and an outer end 45a and 45b of the main cutting edge. As seen in FIG. 3a, the chisel edge 41 forms an acute angle θ with a line L extending between the top outer ends 45a and 45b of the main cutting edges 43a and 43b.

Two concave recesses 47a and 47b are provided at the drill tip 27. One concave recess of the two concave recesses 47a and 47b is disposed on each side of the chisel edge 41. The line L intersects the two concave recesses 47a and 47b. The concave recesses 47a and 47b can facilitate better flow of material pushed from the chisel edge 41 out to the thinning 49a and 49b of the web. Additionally, the feed force necessary with such a twist drill 21 can be decreased because the surface around the chisel edge 41 (particularly the surface by the lip relief area 51a and 51b close to the center) has more clearance and gives the chisel edge a less negative cutting angle, while maintaining a small clearance angle at each lip relief area 51a and 51b to obtain strong main cutting edges 43a and 43b.

As seen in FIGS. 3a and 3b, a bottom edge 53a and 53b of each of the two concave recesses 47a and 47b is disposed at a top of a first part 55a and 55b of the thinning 49a and 49b, or first thinning. A first side edge 57a and 57b of each of the two concave recesses 47a and 47b is disposed at the chisel edge 41. In the illustrated embodiment, each of the two concave recesses 47a and 47b share a single first side edge 57a and 57b defined by the chisel edge 41, however, the side edges of the concave recesses might instead be disposed at a distance from the chisel edge. A second side edge 59a and 59b of each of the two concave recesses 47a and 47b is disposed at a second part 61 a and 61b of the thinning 49a and 49b, or second thinning. Each thinning 49a and 49b thus can have a respective first thinning 55a and 55b or bottom portion and a respective second thinning 61 a and 61b or top portion above the first thinning and adjacent a respective concave surface 47a and 47b. The first thinning 55a and 55b ordinarily forms a non-zero angle with the second thinning 61 a and 61b.

Each of the two concave recess 47a, 47b forms a border with at least one adjacent surface. Each of the two concave recesses 47a and 47b has a top edge 63a and 63b. As seen in FIG. 3a, the line L can intersect the top edge 63a and 63b of each of the two concave recesses 47a and 47b. The top edge 63a and 63b of each of the two concave recesses 47a and 47b can be disposed at a lip relief 65a and 65b. The top edge 63a and 63b of each of the two concave recesses 47a and 47b can form part of a heel 65a and 65b at an intersection between the thinning 49a and 49b and a lip relief 51a and 51b behind the main cutting edges 43a and 43b.

As seen in FIGS. 2 and 3a, each of the two main cutting edges 43a and 43b is disposed at a top edge 71a and 71b of a respective flute 69a and 69b. The flutes 69a and 69b can be defined on one generally axially or helically extending edge opposite the stop surfaces 39a and 39b by a secondary cutting edge 73a and 73b. In addition to intersecting the two concave recesses 47a and 47b, the line L can intersect the top edge 71a and 71b of each of the flutes 69a and 69b. The top edge 71 a and 71b of each of the flutes 69a and 69b can be substantially S-shaped.

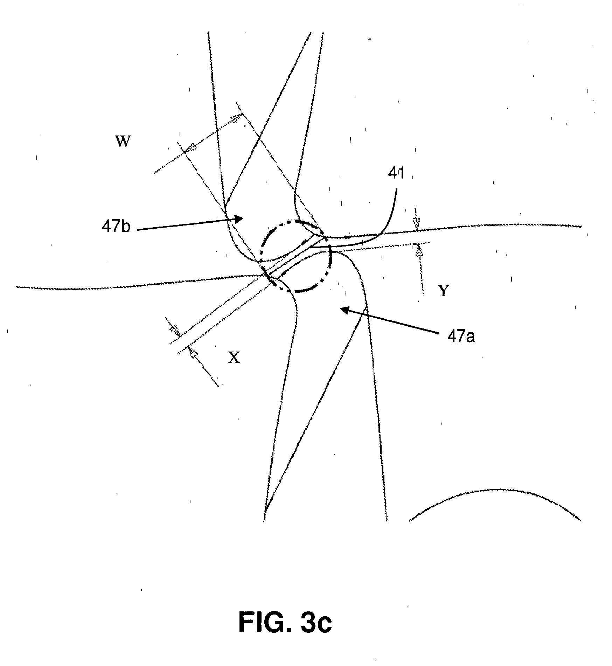

In FIG. 3c, showing an enlarged view of a similar portion of a cutting head as in FIG. 3b of an alternative embodiment according to the present invention having a stronger chisel edge than described above. The concave recesses 47a and 47b are spaced from the chisel edge 41. In FIG. 3c a distance between the two concave recesses 47a, 47b at the chisel edge 41 is depicted by X, a web length of the chisel edge 41 is by depicted W, and a closest distance between a concave recess and a main cutting edge 43a and 43b is depicted by Y.
The dotted circle in FIG. 3c contains the chisel edge 41, and the radius W/2 defines said circle. The following relations may apply:
X > 0 and X < W, preferably X < W/4, i.e. the distance X between the two concave recesses 47a, 47b at the chisel edge 41 is more than zero mm but less than the web length W of the chisel edge 41, and
Y > 0 and Y < W, preferably Y < W/4, i.e. the closest distance Y between a concave recess and a main cutting edge 43a, 43b is more than zero mm but less than the web length W of the chisel edge 41. The closest distance Y may be chosen in the range of 0.05 to 0.15 mm.

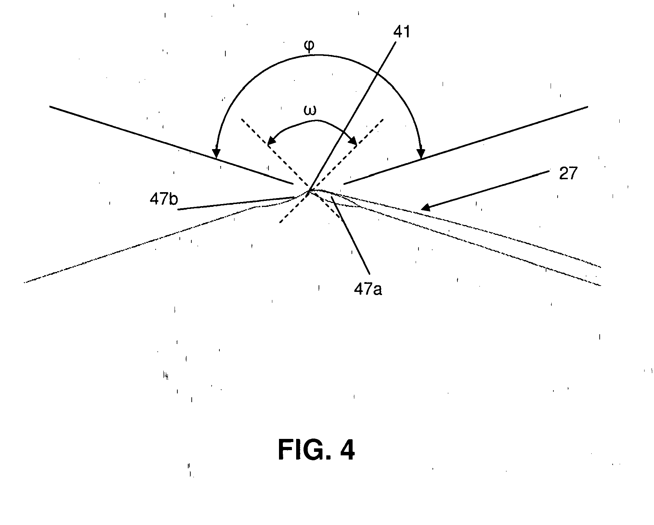

As seen in FIG. 4, a point angle ϕ between the two main cutting edges 43a and 43b is greater than the angle ω between surfaces of the concave recesses 47a and 47b adjacent or proximate the chisel point 41. This configuration can facilitate flow of material pushed from the chisel edge 41 out to the thinning 49a and 49b of the web. Additionally, the feed force necessary with such a twist drill 21 can be decreased because the surface around the chisel edge 41 (particularly the surface by the lip relief area 51a and 51b close to the center) has more clearance and gives the chisel edge a less negative cutting angle. The features X and W are true also for the previously described embodiment of FIGS. 1-3b and 4.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A cutting head (25) comprising a drill tip (27), the drill tip (27) comprising:
a chisel edge (41) defining the forwardmost area of the cutting head;
two main cutting edges (43a, 43b), each main cutting edge (43a, 43b) extending between the chisel edge (41) and an outer end (45a, 45b) of the main cutting edge (43a, 43b);
the chisel edge (41) forming an acute angle (θ) with a line (L) extending between the outer ends (45a, 45b) of the main cutting edges (43a, 43b); and
two recesses (47a, 47b) that are concave when viewed in a direction of rotation of the cutting head, one concave recess (47a, 47b) of the two concave recesses (47a, 47b) being disposed on each side of the chisel edge (41), the line (L) intersecting the two concave recesses (47a, 47b), **characterized in that** a bottom edge (53a, 53b) of each of the two concave recesses (47a, 47b) is concave when viewed in the direction of rotation of the cutting head and is disposed at a top of a respective thinning (49a, 49b), and each of the two concave recesses (47a, 47b) slopes generally axially downwards away from the chisel edge (41) and toward the respective thinning (49a, 49b) at the bottom, concave edge (53a, 53b).

2. The cutting head (25) as set forth in any of claims 1, wherein a first side edge (57a, 57b) of each of the two concave recesses (47a, 47b) is disposed at the chisel edge (41).

3. The cutting head (25) as set forth in any of claims 1-2, wherein each of the two concave recesses (47a, 47b) share a single first side edge (57a, 57b) defined by the chisel edge (41).

4. The cutting head (25) as set forth in any of claims 1-3, wherein a second side edge (59a, 59b) of each of the two concave recesses (47a, 47b) is disposed at a second thinning (61a, 61b).

5. The cutting head (25) as set forth in any of claims 1-4, wherein each of the two concave recesses (47a, 47b) has a top edge (63a, 63b), and the line (L) intersects the top edge (63a, 63b) of each of the two concave recesses (47a, 47b).

6. The cutting head (25) as set forth in any of claims 1-5, wherein a top edge (63a, 63b) of each of the two concave recesses (47a, 47b) is disposed at a lip relief (51b, 51a).

7. The cutting head (25) as set forth in any of claims 1-6, wherein a top edge (63a, 63b) of each of the two concave recesses (47a, 47b) forms part of a heel (65a, 65b) at an intersection between a thinning (49a, 49b) and a lip relief (51b, 51a).

8. The cutting head (25) as set forth in any of claims 1-7, wherein each of the two main cutting edges (43a, 43b) is disposed at a top edge (71a, 71b) of a respective flute (69a, 69b).

9. The cutting head (25) as set forth in claim 8, wherein the line (L) intersects the top edge (71a, 71b) of each of the flutes (69a, 69b).

10. The cutting head (25) as set forth in any of claims 5-9, wherein the top edge (71a, 71b) of each of the flutes (69a, 69b) is S-shaped.

11. The cutting head (25) as set forth in any of claims 1-10, wherein each of the thinnings (49a, 49b) having a top portion (61a, 61b) adjacent a corresponding concave surface (47a, 47b) and a bottom portion (55a, 55b) forming a non-zero angle with the top portion (61 a, 61b).

12. The cutting head (25) as set forth in any of claims 1-11, wherein a distance (X) between the two concave recesses (47a, 47b) at the chisel edge (41) is more than zero mm but less than a web length (W) of the chisel edge (41).

13. The cutting head (25) as set forth in any of claims 1-12, wherein a closest distance (Y) between a concave recess and a main cutting edge (43a, 43b) is more than zero mm but less than a web length (W) of the chisel edge (41).

14. A twist drill (21), characterized i n that it comprises a cutting head (25) as set forth in any of claims 1-13.

15. The twist drill (21) as set forth in claim 14, comprising a shank (23) to which the cutting head (25) is removably attachable.

16. The twist drill (21) as set forth in any of claims 14-15, comprising a bayonet-type coupling (29) between the cutting head (25) and the shank (23).

## Patentansprüche

1. Schneidkopf (25), welcher eine Bohrspitze (27) aufweist, wobei die Bohrspitze (27) aufweist:
eine Querschneide (41), welche den am weitesten vorn liegenden Bereich des Schneidkopfes bildet,
zwei Hauptschneidkanten (43a, 43b), wobei jede Hauptschneidkante (43a, 43b) sich zwischen der Querschneide (41) und einem äußeren Ende (45a, 45b) der Hauptschneidkante (43a, 43b) erstreckt, wobei
die Querschneide (41) einen spitzen Winkel (θ) mit einer Linie (L) bildet, die sich zwischen den äußeren Enden (45a, 45b) der Hauptschneidkanten (43a, 43b) erstreckt, und
zwei Aussparungen (47a, 47b), die in Rotationsrichtung des Schneidkopfes gesehen konkav sind, wobei je eine der konkaven Aussparungen (47a, 47b) auf jeder der Seiten der Querschneide (41) angeordnet ist, und wobei die Linie (L) die beiden konkaven Aussparungen (47a, 47b) schneidet, **dadurch gekennzeichnet, dass** eine untere Kante (53a, 53b) jeder der beiden konkaven Aussparungen (47a, 47b) in Drehrichtung des Schneidkopfes gesehen konkav ist und am oberen Ende einer entsprechenden Ausspitzung (49a, 49b) vorgesehen ist, und wobei jede der beiden konkaven Aussparungen (47a, 47b) weg von der Querschneide (41) im Wesentlichen axial abwärts geneigt und in Richtung der betreffenden Ausspitzung (49a, 49b) an der unteren konkaven Kante (53a, 53b) verläuft.

2. Schneidkopf (25) nach Anspruch 1, wobei eine erste Seitenkante (57a, 57b) auf jeder der beiden konkaven Aussparungen (47a, 47b) an der Querschneide (41) angeordnet ist.

3. Schneidkopf (25) nach einem der Ansprüche 1-2, wobei die beiden konkaven Aussparungen (47a, 47b) eine durch die Querschneide (41) definierte einzige erste Seitenkante (57a, 57b) gemeinsam haben.

4. Schneidkopf (25) nach einem der Ansprüche 1-3, wobei die zweite Seitenkante (59a, 59b) jeder der beiden konkaven Aussparungen (47a, 47b) an einer zweiten Ausspitzung (61 a, 61 b) angeordnet ist.

5. Schneidkopf (25) nach einem der Ansprüche 1-4, wobei jede der beiden konkaven Aussparungen (47a, 47b) eine obere Kante (63a, 63b) hat, und wobei die Linie (L) die obere Kante (63a, 63b) jeder der beiden konkaven Aussparungen (47a, 47b) schneidet.

6. Schneidkopf (25) nach einem der Ansprüche 1 bis 5, wobei die obere Kante (63a, 63b) jeder der beiden konkaven Aussparungen (47a, 47b) an einer Lippenfreifläche (51b, 51 a) angeordnet ist.

7. Schneidkopf (25) nach einem der Ansprüche 1-6, wobei eine obere Kante (63a, 63b) jeder der beiden konkaven Aussparungen (47a, 47b) einen Teil einer Ferse (65a, 65b) an einem Schnitt zwischen einer Ausspitzung (49a, 49b) und einer Lippenfreifläche (51 b, 51 a) bildet.

8. Schneidkopf (25) nach einem der Ansprüche 1-7, wobei jede der beiden Hauptschneidkanten (43a, 43b) an einer oberen Kante (71 a, 71 b) einer entsprechenden Spannut (69a, 69b) angeordnet ist.

9. Schneidkopf (25) nach Anspruch 8, wobei die Linie (L) die obere Kante (71 a, 71 b) jeder der Spannuten (69a, 69b) schneidet.

10. Schneidkopf (25) nach einem der Ansprüche 5-9, wobei die obere Kante (71 a, 71 b) jeder der Spannuten (69a, 69b) S-förmig ist.

11. Schneidkopf (25) nach einem der Ansprüche 1-10, wobei jede der Ausspitzungen (49a, 49b) einen oberen Abschnitt (61 a, 61 b) im Anschluss an die entsprechende konkave Oberfläche (47a, 47b) und einen unteren Abschnitt (55a, 55b) hat, der einen von Null verschiedenen Winkel mit dem oberen Abschnitt (61 a, 61 b) einschließt.

12. Schneidkopf (25) nach einem der Ansprüche 1-11, wobei ein Abstand (X) zwischen den beiden konkaven Aussparungen (47a, 47b) an der Querschneide (41) größer als Null mm ist, jedoch weniger als die Stegbreite (W) an der Querschneide (41) beträgt.

13. Schneidkopf (25) nach einem der Ansprüche 1-12, wobei ein kleinster Abstand (Y) zwischen einer konkaven Aussparung und einer Hauptschneidkante (43a, 43b) größer als Null mm ist, jedoch weniger als die Stegbreite (W) an der Querschneide (41) beträgt.

14. Spiralbohrer (21), **dadurch gekennzeichnet, dass** er einen Schneidkopf (25) nach einem der Ansprüche 1-13 aufweist.

15. Spiralbohrer (21) nach Ansprüche 14, welcher einen Schaft (23) aufweist, an welchem der Schneidkopf (25) lösbar angebracht ist.

16. Spiralbohrer (21) nach einem der Ansprüche 14 oder 15, welcher eine bajonettartige Kupplung (29) zwischen dem Schneidkopf (25) und dem Schaft (23) aufweist.

## Revendications

1. Tête de découpe (25) comprenant une pointe de foret (27), la pointe de foret (27) comprenant :
une arête d'intersection de deux lèvres (41) définissant la zone la plus en avant de la tête de découpe ;
deux arêtes tranchantes principales (43a, 43b), chaque arête tranchante principale (43a, 43b) s'étendant entre l'arête d'intersection de deux lèvres (41) et une extrémité extérieure (45a, 45b) de l'arête tranchante principale (43a, 43b) ;
l'arête d'intersection de deux lèvres (41) formant un angle aigu (θ) avec une ligne (L) s'étendant entre les extrémités extérieures (45a, 45b) des arêtes tranchantes principales (43a, 43b) ; et
deux évidements (47a, 47b) qui sont concaves lorsqu'ils sont observés dans un sens de rotation de la tête de découpe, un évidement concave (47a, 47b) parmi les deux évidements concaves (47a, 47b) étant disposé sur chaque côté de l'arête d'intersection de deux lèvres (41), la ligne (L) coupant les deux évidements concaves (47a, 47b), **caractérisée en ce qu'**une arête inférieure (53a, 53b) de chaque évidement parmi les deux évidements concaves (47a, 47b) est concave lorsqu'elle est observée dans le sens de rotation de la tête de découpe et est disposée au niveau d'un sommet d'une partie amincie respective (49a, 49b), et chaque évidement parmi les deux évidements concaves (47a, 47b) s'incline globalement axialement vers le bas en s'écartant de l'arête d'intersection de deux lèvres (41) et en direction de la partie amincie (49a, 49b) au niveau de l'arête inférieure, concave (53a, 53b).

2. Tête de découpe (25) selon la revendication 1, dans laquelle une première arête latérale (57a, 57b) de chaque évidement parmi les deux évidements concaves (47a, 47b) est disposé au niveau de l'arête d'intersection de deux lèvres (41).

3. Tête de découpe (25) selon l'une quelconque des revendications 1 et 2, dans laquelle chaque évidement parmi les deux évidements concaves (47a, 47b) partage une seule première arête latérale (57a, 57b) définie par l'arête d'intersection de deux lèvres (41).

4. Tête de découpe (25) selon l'une quelconque des revendications 1 à 3, dans laquelle une deuxième arête latérale (59a, 59b) de chaque évidement parmi les deux évidements concaves (47a, 47b) est disposée au niveau d'une deuxième partie amincie (61a, 61b).

5. Tête de découpe (25) selon l'une quelconque des revendications 1 à 4, dans laquelle chaque évidement parmi les deux évidements concaves (47a, 47b) comporte une arête supérieure (63a, 63b), et la ligne (L) coupe l'arête supérieure (63a, 63b) de chaque évidement parmi les deux évidements concaves (47a, 47b).

6. Tête de découpe (25) selon l'une quelconque des revendications 1 à 5, dans laquelle une arête supérieure (63a, 63b) de chaque évidement parmi les deux évidements concaves (47a, 47b) est disposée au niveau d'une dépouille (51b, 51a).

7. Tête de découpe (25) selon l'une quelconque des revendications 1 à 6, dans laquelle une arête supérieure (63a, 63b) de chaque évidement parmi les deux évidements concaves (47a, 47b) fait partie d'un talon (65a, 65b) au niveau d'une intersection entre la partie amincie (49a, 49b) et une dépouille (51a, 51b).

8. Tête de découpe (25) selon l'une quelconque des revendications 1 à 7, dans laquelle chaque arête parmi les deux arêtes tranchantes principales (43a, 43b) est disposé au niveau d'une arête supérieure (71a, 71b) d'une cannelure respective (69a, 69b).

9. Tête de découpe (25) selon la revendication 8, dans laquelle la ligne (L) coupe l'arête supérieure (71a, 71b) de chaque cannelure parmi les cannelures (69a, 69b).

10. Tête de découpe (25) selon l'une quelconque des revendications 5 à 9, dans laquelle l'arête supérieure (71a, 71b) de chaque cannelure parmi les cannelures (69a, 69b) présente une forme de S.

11. Tête de découpe (25) selon l'une quelconque des revendications 1 à 10, dans laquelle chaque partie amincie parmi les parties amincies (49a, 49b) présentant une partie supérieure (61a, 61b) adjacente à une surface concave correspondante (47a, 47b) et une partie inférieure (55a, 55b) formant un angle non nul avec la partie supérieure (61a, 61b).

12. Tête de découpe (25) selon l'une quelconque des revendications 1 à 11, dans laquelle une distance (X) entre les deux évidements concaves (47a, 47b) au niveau de l'arête d'intersection de deux lèvres (41) est supérieure à zéro millimètre mais est inférieure à une longueur d'âme (W) de l'arête d'intersection de deux lèvres (41).

13. Tête de découpe (25) selon l'une quelconque des revendications 1 à 12, dans laquelle une distance plus proche (Y) entre un évidement concave et une arête tranchante principale (43a, 43b) est supérieure à zéro millimètre mais est inférieure à une longueur d'âme (W) de l'arête d'intersection de deux lèvres (41).

14. Forêt hélicoïdal (21), **caractérisé en ce qu'**il comprend une tête de découpe (25) selon l'une quelconque des revendications 1 à 13.

15. Forêt hélicoïdal (21) selon la revendication 14, comprenant une queue (23) sur laquelle la tête de découpe (25) peut être fixée de manière amovible.

16. Forêt hélicoïdal (21) selon quelconque des revendications 14 et 15, comprenant un accouplement de type baïonnette (29) entre la tête de découpe (25) et la queue (23).
